# EUROPÄISCHE PATENTSCHRIFT

(11) **EP 1 561 567 B1**
(45) Veröffentlichungstag und Bekanntmachung des Hinweises auf die Patenterteilung: **24.09.2014**
(21) Anmeldenummer: 05001770.6
(22) Anmeldetag: 28.01.2005
(51) Int. Cl.: B30B 15/16, B29C 65/20, B30B 1/38, E06B 3/96, B30B 1/18

(54) **Vorrichtung und Verfahren zum Verschweissen von Kunststoffprofilen zu einem Rahmenteil**
Apparatus and process for manufacturing a frame part by welding plastic profiles
Appareil et procédé pour la fabrication d'une partie d'un cadre par soudage d'éléments profilés en matière plastique

(30) Priorität: 09.02.2004 DE 102004006421
(43) Veröffentlichungstag der Anmeldung: 10.08.2005
(73) Patentinhaber: Wilhelm Hollinger Maschinenbau GmbH & Co. KG, 66953 Pirmasens (DE)
(72) Erfinder: Chini, Werner, 66976 Rodalben (DE); Hollinger, Peter, 66955 Pirmasens (DE)
(74) Vertreter: Tergau & Walkenhorst

(56) Entgegenhaltungen:
- EP-A1- 1 136 234
- WO-A1-96/06723
- DE-A1- 1 704 219
- JP-A- 9 057 853
- US-A- 4 227 959
- US-A- 5 753 065

## Beschreibung

Die Erfindung betrifft eine Vorrichtung zum Verschweißen von Profilen aus Kunststoff zu einem Rahmenteil, insbesondere für Fenster, Türen oder dergleichen, mit einem über einen Primärantrieb angetriebenen Arbeitsschlitten, der mittels einer Anzahl von schaltbaren Wegeanschlägen in eine Anzahl von Betriebspositionen verfahrbar ist. Sie bezieht sich weiter auf ein Verfahren zum Verschweißen von Kunststoffprofilen.

Die Herstellung von Fensterrahmen, Blendrahmen oder dergleichen auf Kunststoffbasis erfolgt in der Regel durch Verschweißen von auf Gehrung geschnittenen Profilstücken. Die verwendeten Schweißmaschinen arbeiten dabei in der Regel nach dem sogenannten Heizspiegelschweißverfahren. Dabei werden die zu verschweißenden Profile zunächst in einer Vorrichtung ausgerichtet und eingespannt. Anschließend werden die Gehrungsflächen mit einem dazwischenfahrenden Heizspiegel erwärmt. Nach Ablauf der Schmelzzeit fährt der Heizspiegel aus der Gehrung, und die angewärmten Gehrungsflächen werden zusammengepresst oder gestaucht und so miteinander verschweißt.

Auslegungsziel bei der Realisierung derartiger Schweißmaschinen ist eine hohe Taktzahl von produzierten Fenstern und eine hohe Genauigkeit der Schweißverbindungen. Man unterscheidet Einstellen- und Mehrstellenschweißmaschinen. Bei Mehrstellenschweißmaschinen können für eine höhere Taktzahl mehrere Profile gleichzeitig miteinander verbunden werden.

Bei einer sogenannten Vier-Kopf- bzw. Vierstellen-Schweißmaschine werden beispielsweise vier Profilstücke gleichzeitig mittels vier Schweißaggregaten miteinander verschweißt. Als Schweißaggregate sind dabei jeweils Vorrichtungen zum Verschweißen von Kunststoffprofilen eingesetzt. Grundsätzlich sind dabei jeweils zwei Schweißaggregate auf einem Aggregatträger angeordnet, von denen zwei gegebenenfalls parallel sind. Ein Aggregatträger ist fest mit dem Untergestell der Schweißmaschine verschraubt, während ein zweiter quer zum ersten verfahrbar ist, um beispielsweise unterschiedliche Fensterbreiten zu verschweißen. Ein Arbeitsgang zum Verschweißen der Kunstsstoffprofile umfasst üblicherweise die Arbeitsschritte "Einrichten", "Schmelzen" und "Stauchen". Um die bei diesen Arbeitsschritten üblicherweise jeweils verschiedene relative Positionierung der Profile zueinander geeignet einstellen zu können, umfasst das Schweißaggregat in der Regel einerseits einen ortsfesten Schlitten, der fest mit dem Aggregatträger verbunden ist, und andererseits einen beweglichen Arbeitsschlitten, der die Arbeitsbewegungen beim Einrichten, Schmelzen und Stauchen der Profile durchführt. Für die Einstellung reproduzierbarer Positionierungen sind auf dem Schweißaggregat jeweils ein Profilanschlag zum Ausrichten der Profile, ein Schmelzanschlag zum Anschmelzen der Profilenden sowie ein Stauchanschlag zum Zusammenpressen der Profile als schaltbare Wegeanschläge für den Arbeitsschlitten vorgesehen; weiterhin sind ein Schweißspiegel zum Anschmelzen der Profilstirnseiten sowie Spanneinheiten zum Fixieren der Profile in der Schweißmaschine vorhanden.

Um beim Verschweißen eine hohe Maßtoleranz zu gewährleisten und sogenannte "schlechte Ecken" zu vermeiden, kann ein Schweißaggregat mit einer Zentriervorrichtung ausgestattet sein, die den beweglichen Schlitten mit dem eingespannten Profil beim Heranfahren an die anderen Profile zwischen diesen zentriert. Auf diese Weise können vorhandene Toleranzfehler der Profile auf jeweils zwei Ecken bzw. Schweißverbindungen verteilt werden.

Die beweglichen Arbeitsschlitten von Schweißaggregaten sind üblicherweise über einen Primärantrieb, in der Regel pneumatisch, angetrieben, was eine hohe Taktzahl erlaubt. Solche pneumatisch angetriebene Schlitten sind zum Beispiel in den Dokumenten WO 96/06723, DE 1704219, JP 9057853, EP 1136234, US 4227959 und US 5753065 offenbart. Die Begrenzung der Arbeitswege beim Anfahren der einzelnen Bearbeitungspositionen erfolgt über schaltbare Wegeanschläge, und der Anschmelzdruck beim Verschweißen der Profile wird über pneumatische Druckregelventile eingestellt. In der Regel ist jeweils für die Positionierungen des Arbeitsschlittens an den Punkten Einrichten, Schmelzen und Stauchen ein schaltbarer Wegeanschlag vorgesehen. Alternativ können die Arbeitsschlitten auch über Servomotoren eingestellt werden, wobei der Anschmelzdruck elektrisch über das Motormoment eingestellt wird. Aufgrund der hohen Belastbarkeit und der hohen erreichbaren Kräfte werden in der Regel pneumatische Antriebe bevorzugt.

Nachteilig an pneumatisch angetriebenen Arbeitsschlitten ist, dass die erwärmten Profile beim Stauchen mit voller Schlittengeschwindigkeit an den Gehrungsflächen aufeinander treffen. Dies wirkt sich nachteilig für die Schweißverbindung aus. Außerdem treffen die Profile beim Erwärmen ungebremst auf den Heizspiegel auf. Dadurch verschleißt die Schutzbeschichtung des Heizspiegels vergleichsweise schnell. Des weiteren kann das Abschmelzverhalten nur über den Arbeitsdruck beeinflusst werden. Bei der Anwendung von Mehrstellenschweißmaschinen laufen die Arbeitsschlitten zudem in der Regel nicht synchron, wodurch sich die Zuschnittstoleranzen oft auf ein Schweißaggregat konzentrieren. Aus diesen Gründen kann die Fertigungsqualität bei derartigen Systemen beeinträchtigt sein.

Der Erfindung liegt daher die Aufgabe zugrunde, eine Vorrichtung zum Verschweißen von Kunststoffprofilen der oben genannten Art anzugeben, die zum Einsatz in Profilschweißmaschinen besonders geeignet ist und bei einer hohen Arbeitsgeschwindigkeit eine besonders hohe Schweißqualität erlaubt.

Bezüglich der Vorrichtung wird diese Aufgabe erfindungsgemäß gelöst mit einem Grob-Wegeanschlag für den Arbeitsschlitten, der mit einem in Bewegungsrichtung des Arbeitsschlittens verschiebbaren, über einen Sekundärantrieb angetriebenen Dorn zusammenwirkt.

Die Erfindung geht dabei von der Überlegung aus, dass eine hohe Arbeitsgeschwindigkeit und damit eine hohe Taktzahl einer Profilschweißmaschine eine vergleichsweise hohe Bewegungsgeschwindigkeit des Arbeitsschlittens bei einer Verschiebung zwischen zwei Betriebspositionen voraussetzt. Gerade dies führt aber beim Auftreffen auf einen Wegeanschlag zu einem sehr abrupten Abbremsen. Durch das abrupte Abbremsen des Arbeitsschlittens aus einer derartig hohen Bewegungsgeschwindigkeit durch den jeweiligen Wegeanschlag können ungünstige Wirkungen auf das mitgeführte Kunststoffprofil oder dessen Material, beispielsweise beim eigentlichen Verschweißen, auftreten, die die Produktqualität entscheidend mindern. Um somit sowohl eine vergleichsweise hohe Arbeitsgeschwindigkeit als auch eine vergleichsweise hohe Schweißqualität zu gewährleisten, sollte der Bewegungsvorgang beim Verschieben des Arbeitsschlittens beim Anfahren einer Betriebsposition in mehrere Phasen aufgeteilt sein, nämlich in eine erste Bewegungsphase mit vergleichsweise hoher Bewegungsgeschwindigkeit und in eine zweite Bewegungsphase, in der der Arbeitsschlitten mit vergleichsweise geringer Bewegungsgeschwindigkeit aus einer Näherungsposition in die eigentliche Betriebsposition gebracht wird. Für die erste Bewegungsphase, in der der Arbeitsschlitten mit hoher Geschwindigkeit in die Näherungsposition gebracht wird, ist der Grob-Wegeanschlag für den Arbeitsschlitten vorgesehen, an den dieser über den ihn zugeordneten Primärantrieb angefahren wird. Für die zweite Bewegungsphase, in der die endgültige Zielposition mit vergleichsweise geringer Bewegungsgeschwindigkeit angesteuert wird, ist ein Sekundärantrieb mit zugeordnetem Bewegungsmechanismus vorgesehen.

Vorzugsweise wirkt der Dorn gegen die Arbeitsbewegung des Primärantriebs. Um dabei bei einer hohen Fahrgeschwindigkeit des Arbeitsschlittens den Aufprall der Profile aufeinander oder auf den Heizspiegel zu vermeiden, ist den Wegeanschlägen jeweils der Grob-Wegeanschlag vorgeschaltet. Durch diesen und den mit ihm zusammenwirkenden Dorn wird der Arbeitsschlitten bereits vor dem Erreichen des eigentlichen Wegeanschlags abgebremst. Die restliche Wegstrecke bis zum eigentlichen Wegeanschlag, also insbesondere bis zum Auffahren des Profils auf den Heizspiegel oder auf das zu verschweißende andere Profil, kann dann kontrolliert eine Rückzugsbewegung des Dorns mittels des Sekundärantriebs durchgeführt werden. Der Aufprall der Profile aufeinander oder auf den Heizspiegel erfolgt somit lediglich mit der vergleichsweise geringen Geschwindigkeit, mit der der Dorn zurückgezogen wird. Durch die Wirkungsrichtung des Dorns entgegen der Arbeitsbewegung des Primärantriebs ist dabei zudem gewährleistet, dass eventuell benötigte Anpresskräfte, beispielsweise zum Anpressen der Profile gegeneinander oder zum Anpressen der Profile gegen den Heizspiegel, vollständig durch den Primärantrieb des Antriebschlittens aufgebracht werden können. Somit ist für die Bereitsstellung der erforderlichen Anpresskräfte die Nutzung des vergleichsweise großdimensionierten Primärantriebs ermöglicht, so dass der Sekundärantrieb hinsichtlich Antriebsleistung und dergleichen vergleichsweise gering dimensioniert sein kann.

Der Primärantrieb kann beispielsweise als elektromechanischer oder als hydraulischer Antrieb ausgestaltet sein. Eine besonders einfache und günstige Bauweise ist aber erreichbar, indem der Primärantrieb vorzugsweise als pneumatischer Antrieb ausgestaltet ist.

Der Dorn ist vorzugsweise als elektrische angetriebene Spindel ausgestaltet. Diese ist in weiterer zweckmäßiger Ausgestaltung über einen Antriebsriemen mit einem Schrittmotor angetrieben. Dieser kann insbesondere parallel zum pneumatischen Antrieb an dem Schweißaggregat angebracht werden.

Um den Aufprall des Arbeitsschlittens beim Anprall des Grob-Wegeanschlags an dem Dorn zu dämpfen, ist der Grob-Wegeanschlag vorteilhafterweise mit einem Dämpfungselement versehen. Das Dämpfungselement kann dabei insbesondere aus einer vorgespannten Feder bestehen. Die Vorspannung der Feder sollte dabei größer sein als die maximal auftretende Kraft des pneumatischen Antriebs des Arbeitsschlittens.

Um mit dem Arbeitsschlitten eine vorgegebene Wegestelle gezielt und automatisiert anfahren zu können, ist dem Dorn vorzugsweise ein Positionssensor zugeordnet, über den sich die Position des Dorns und damit die des Arbeitsschlittens und des eingespannten Profils bestimmen lässt.

Für eine automatisierte Bedienung ist dem Primärantrieb und dem Sekundärantrieb vorteilhafterweise eine gemeinsame Regeleinheit zugeordnet. Um dabei die erstrebte Aufteilung des Bewegungsvorgangs des Arbeitsschlittens in zumindest eine Grob-Positionierung und eine anschließende Feinpositionierung zuverlässig zu ermöglichen, steuert die Regeleinheit den Sekundärantrieb vorzugsweise derart an, dass der Dorn ausgehend vom Grob-Wegeanschlag den bis zu einem ausgewählten Wegeanschlag verbleibenden Rest-Arbeitsweg des Arbeitsschlittens freigibt, wobei die Freigabe des Restwegs vorzugsweise sukzessive und/oder mit einer für die Feinpositionierung geeignet gewählten Geschwindigkeit erfolgt.

Gerade durch die Bereitstellung des Sekundärantriebs für den mit dem Grob-Wegeanschlag zusammenwirkenden Dorn in Ergänzung zum Primärantrieb des Antriebschlittens ist eine Anpassung der Endphase des Bewegungsvorgangs des Arbeitsschlittens an situations- oder materialspezifische Vorgaben oder Randbedingungen besonders erleichtert. Um dies konsequent zu nutzen, wird der für die Rückzugsbewegung des Dorns vorgesehene Sekundärantrieb in besonders vorteilhafter Ausgestaltung abhängig vom aktuellen Betriebszustand und/oder abhängig von vorgegebenen Materialkennwerten beispielsweise des zu bearbeitenden Kunststoffprofils gezielt angesteuert. Um dies zu ermöglichen, umfasst die Regeleinheit in weiterer vorteilhafter Ausgestaltung einen Speicherbaustein, in dem zur Ansteuerung des Dorns in Abhängigkeit von einem der jeweiligen Bearbeitungsposition zugeordneten Arbeitsschritt und/oder abhängig von einem für das Kunststoffprofil charakteristischen Parameter, insbesondere einem Materialkennwert, eine Mehrzahl von Zeit-Wege-Kennlinien hinterlegt sind.

Somit kann die Endphase der Bewegung des Arbeitsschlittens beispielsweise abhängig davon geeignet angesteuert werden, ob es sich beim jeweiligen Arbeitsschritt um das Einrichten, das Anschmelzen oder das Verpressen oder Stauchen der Kunststoffprofile handelt. Insbesondere beim Verpressen oder Stauchen, also beim eigentlichen Schweißvorgang, kann dabei für die eigentliche Annäherung der Kunststoffprofile aneinander eine vergleichsweise gering gehaltene Bewegungsgeschwindigkeit mit entsprechend gering gehaltenem störendem Einfluss auf den eigentlichen Schweißvorgang vorgesehen sein. Desgleichen kann gerade in diesem Arbeitsschritt die endgültige Annäherung der Kunststoffprofile aneinander abhängig vom zu bearbeitenden Material, dessen plastischen Eigenschaften sowie Schmelzpunkten und dergleichen erfolgen.

Beim Einsatz in einer Mehrstellen-Schweißmaschine werden vorteilhafterweise die Antriebe einer Mehrzahl der genannten Vorrichtungen synchron angesteuert, so dass insbesondere eine selbsttätige Zentrierung der Profile erfolgen kann. Bezüglich des Verfahrens zum Verschweißen von Kunststoffprofilen zu einem Rahmenteil, insbesondere für Fenster, Türen oder dergleichen, wird die genannte Aufgabe gelöst, indem eine Anzahl der Kunststoffprofile mittels eines über einen Primärantrieb angetriebenen Arbeitsschlittens in eine Anzahl von über zugeordnete Wegeanschläge vorgegebene Bearbeitungspositionen gebracht wird, wobei beim Anfahren einer Bearbeitungsposition zunächst ein mit einem Dorn zusammenwirkender Grob-Wegeanschlag für den Arbeitsschlitten angefahren wird, und wobei anschließend über eine Ansteuerung des Dorns über einen Sekundärantrieb ausgehend vom Grob-Wegeanschlag der bis zum ausgewählten Wegeanschlag verbleibende Restweg des Arbeitsschlittens freigegeben wird.

Vorzugsweise wirkt dabei der Dorn gegen die Arbeitsbewegung des Primärantriebs. In alternativer oder zusätzlicher vorteilhafter Weiterbildung ist der Dorn als über einen als Schrittmotor angetriebene Spindel ausgestaltet.

Um eine besonders flexible Anpassung der Bewegungsabläufe an arbeitsschrittabhängige oder produktabhängige Randbedingungen oder Parameter zu ermöglichen, wird der Dorn hinsichtlich seiner Bewegungsgeschwindigkeit und/oder seines Arbeitswegs vorteilhafterweise abhängig von einem der jeweiligen Bearbeitungsposition zugeordneten Arbeitsschritt und/oder abhängig von einem für das Kunststoffprofil charakteristischen Parameter, insbesondere einem Materialkennwert, angesteuert.

Die mit der Erfindung erzielten Vorteile bestehen insbesondere darin, dass durch die Nutzung eines mit einem separat angetriebenen Dorn zusammenwirkenden Grob-Wegeanschlags eine Aufteilung des Bewegungsvorgangs des Arbeitschlittens in zumindest zwei Phasen ermöglicht ist, wobei gerade in der letzten Phase ein zu harter Aufprall zweier Profile aufeinander oder eines Profils auf dem Heizspiegel verhindert werden kann. Dadurch lassen sich selbst bei durch den Primärantrieb erzielbarer hoher Arbeitsgeschwindigkeit Fertigungsfehler der Schweißnaht vermeiden.

Weiterhin können über die Wegesteuerung spezifische Erfordernisse beim Auf- und Verschmelzen der Profile berücksichtigt werden. Dadurch und über die beschriebene Steuerung der Schweißaggregate lässt sich bei Mehrstellenmaschinen ein besonders exakter Gleichlauf der Arbeitsschlitten erreichen, was eine höhere Eckfestigkeit der verschweißten Profile ermöglicht. Außerdem kann die Haltbarkeit des Schweißspiegels durch die Vermeidung von zu hohen Aufprällen der Profile verlängert werden.

Ein Ausführungsbeispiel der Erfindung wird anhand einer Zeichnung näher erläutert. Darin zeigen:
- Figur 1:: eine Vorrichtung zum Verschweißen von Kunststoffprofilen in einer ersten Arbeitsstellung,
- Figur 2:: die Vorrichtung nach Figur 1 in einer zweiten Arbeitsstellung, und Figur 3 einen Spindelantrieb der Vorrichtung nach Figur 1 in Seitenansicht.

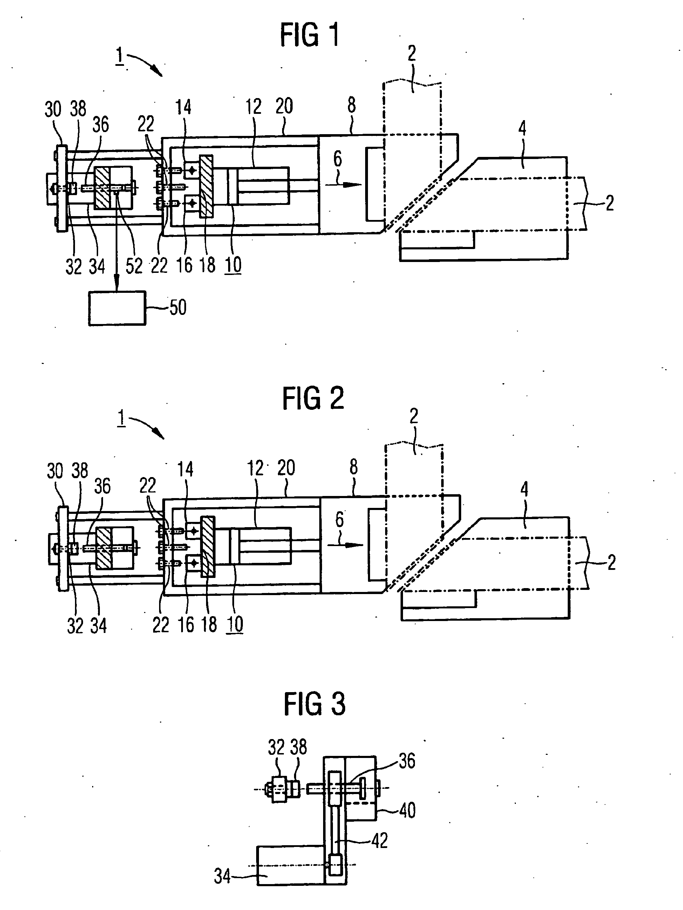

Gleiche Teile sind in allen Figuren mit den selben Bezugszeichen versehen.
Die Vorrichtung 1 gemäß Figur 1 ist zum Verschweißen von auf Gehrung geschnittenen Kunststoffprofilen 2 miteinander vorgesehen. Sie ist Teil einer Vierstellen-Schweißmaschine, die als Schweißaggregate vier Vorrichtungen 1 umfasst und zur Herstellung von Rahmenteilen für Fenster, Türen oder dergleichen dient.

Die Vorrichtung 1 umfasst einen feststehenden Tisch 4, auf dem eines der Kunststoffprofile 2 mit einer nicht näher dargestellten Spannvorrichtung eingespannt werden kann. Das mit diesem zu verschweißende weitere Kunststoffprofil 2 ist in einen in einer durch den Pfeil 6 angedeuteten Arbeitsrichtung bewegbaren Arbeitsschlitten 8 der Vorrichtung 1 einspannbar. Der Arbeitsschlitten 8 ist zur Durchführung von Arbeitsbewegungen in der Arbeitsrichtung über einen im Ausführungsbeispiel als pneumatischer Antrieb ausgestalteten Primärantrieb 10 angetrieben. In Figur 1 ist dabei der pneumatische Antriebszylinder 12 einschließlich des darin geführten Hubkolbens gezeigt.

Die Vorrichtung 1 ist zum Verschweißen der Kunststoffprofile 2 mit den aufeinanderfolgenden Arbeitsschlitten "Einrichten", "Anschmelzen" und "Stauchen" oder Verpressen ausgelegt. Dabei wird das im Arbeitsschlitten 8 eingespannte Kunststoffprofil 2 zunächst ausgerichtet. Anschließend wird im Arbeitsschritt "Anschmelzen" ein nicht näher dargestellter Heizspiegel zwischen die Kunststoffprofile 2 geschwenkt und danach über den Arbeitsschlitten 8 das darin eingespannte Kunststoffprofil 2 herangefahren, so dass die Kunststoffprofile 2 am zwischenliegenden Heizspiegel an ihren Gehrungsflächen aufschmelzen. Abschließend werden nach dem Herausschwenken des Heizspiegels die Kunststoffprofile 2 im Arbeitsschritt "Stauchen" an ihren Gehrungsflächen zusammen gefahren, so dass sie miteinander verschweißen.

Für die verschiedenen Arbeitsschritte sind unterschiedliche Positionierungen der Kunststoffprofile 2 relativ zueinander erforderlich. Der Positionierung erfolgt dabei mittels Bewegung des Arbeitsschlittens über dessen Primärantrieb 10. Um mit dem Arbeitsschlitten 8 das eingespannte Kunststoffprofil 2 an den entsprechenden Bearbeitungspositionen für Ausrichten, Schmelzen und Stauchen positionieren zu können, ist der Arbeitsschlitten 8 mittels einer Anzahl von Wegeanschlägen 14, 16, 18 in einer Anzahl vorgegebener Betriebspositionen verfahrbar.

Die Wegeanschläge 14, 16, 18, die ortsfest mit dem Tisch 4 verbunden sind, wirken dabei jeweils mit in einem gemeinsamen, am Arbeitsschlitten 8 befestigten Halterahmen 20 angeordneten Anschlagsdornen 22 zusammen. Falls bei einer Bewegung des Arbeitsschlittens 8 in Arbeitsrichtung einer der Anschlagsdornen 22 mit dem ihm jeweils zugeordneten Wegeanschlag 14, 16, 18 in Kontakt kommt, so wird der Arbeitsschlitten 8 unmittelbar in der dadurch vorgegebenen Betriebsposition fixiert, so dass durch geeignete Wahl und Dimensionierung der Anschlagsdornen 22 in Kombination mit den zugeordneten Wegeanschlägen 14, 16, 18 fest vorgegebene Betriebspositionen einstellbar sind. Die Arbeitsdornen 22 können dabei beispielsweise als in den Halterahmen 20 eingebrachte Schrauben ausgeführt sein, so dass durch ein Verdrehen der Schrauben eine Längenänderung des jeweiligen Anschlagsdorns 22 und damit eine entsprechende Veränderung der zugeordneten Betriebsposition erreichbar ist. Um sukzessive entsprechend den jeweiligen Arbeitsschritten ein separates Anfahren der durch die Wegeanschläge 14, 16, 18 jeweils vorgegebenen Betriebspositionen zu ermöglichen, sind zumindest die Wegeanschläge 14, 16 als schaltbare Wegeanschläge ausgeführt. Im Ausführungsbeispiel entspricht der Wegeanschlag 14 dabei dem Einrichtanschlag, der Wegeanschlag 16 dem Schmelzanschlag und der Wegeanschlag 18 dem Stauchanschlag.

Um die Wirkungsweise der Wegeanschläge 14, 16, 18 zu verdeutlichen, ist in Figur 1 der Arbeitsschlitten 8 in einer Positionierung unabhängig von einem der Wegeanschläge 14, 16, 18 gezeigt. Nach einer geringfügigen Verschiebung in Arbeitsrichtung schlägt der dem Wegeanschlag 14 zugeordnete Anschlagsdorn 22 an diesen an, wie dies in Figur 2 gezeigt ist. In dieser Positionierung befindet sich das jeweilige Kunststoffprofil 2 somit in der korrekten Bearbeitungsposition für den Arbeitsschritt "Stauchen".

Das Anfahren des Arbeitsschlittens 8 an die Wegeanschläge 14, 16, 18 könnte unter anderem auch im Hinblick auf die vergleichsweise hohen Antriebskräfte des pneumatischen Antriebs 12 zu einem sehr abrupten Stillstand des Arbeitsschlittens 8 mit entsprechend nachteiligen Auswirkungen auf die bearbeiteten Kunststoffprofile 2 führen. Um dies zu vermeiden und bei hoher Arbeitsgeschwindigkeit eine besonders hohe Fertigungsqualität zu ermöglichen, ist die Vorrichtung 1 dafür ausgelegt, in einem mehrstufigen oder mehrphasigen Bewegungsablauf den Arbeitsschlitten 8 in eine der vorgesehenen Betriebspositionen zu verfahren. Um dies zu ermöglichen, weist der Arbeitsschlitten 8 einen an einem am Halterahmen 20 angeordneten Zusatzhalterahmen 30 befestigten Grob-Wegeanschlag 32 auf.

Dieser wirkt mit einem in Bewegungsrichtung des Arbeitsschlittens 8 verschiebbaren, über einen Sekundärantrieb 34 angetriebenen Dorn 36 zusammen. Zum Anfahren einer Betriebsposition für den Arbeitsschlitten 8 ist dabei vorgesehen, dass zunächst der Dorn 36 geeignet bei einem Näherungswert für die Betriebspositon positioniert wird. Beim Anfahren des Arbeitsschlittens 8 an die vorgesehene Betriebsposition schlägt sodann der Grob-Wegeanschlag 32 am Dorn 36 an und bringt den Arbeitsschlitten 8 in eine Position in der Nähe der eigentlich vorgesehenen Betriebsposition zum Stillstand. Hiervon ausgehend wird der Dorn 36 sodann über den Sekundärantrieb 34 kontrolliert aus seiner Position bewegt und gibt somit zusätzlichen Arbeitsweg für den Arbeitsschlitten 8 frei. Geführt vom Dorn 36 gelangt der Arbeitsschlitten 8 somit an die vom jeweils ausgewählten oder aktivierten Wegeanschlag 14, 16, 18 definierte eigentliche Betriebsposition, wobei Aufprallgeschwindigkeit und dergleichen über eine entsprechende Ansteuerung des Sekundärantriebs 34 einstellbar sind.

Der Dorn 36 ist dabei derart ausgelegt, dass er gegen die Arbeitsbewegung des Arbeitsschlittens 8 wirkt. Dabei gibt eine "Rückwärtsbewegung" des Dorns 36 zusätzlichen Arbeitsweg für den Arbeitsschlitten 8 frei, so dass dieser sich in "Vorwärtsrichtung" seiner Arbeitsrichtung weiterbewegen kann.

Um den Aufprall des Grob-Wegeanschlags 32 auf den Dorn 36 abzumildern, ist der Grob-Wegeanschlag 32 mit einem Dämpfungselement 38 versehen. Wie in Figur 3 in Seitenansicht gezeigt, ist der Dorn 36 als Spindel ausgelegt, der über einen Schrittmotor als Sekundärantrieb 34 antreibbar ist. Die Spindel ist dabei in einem Lagergehäuse 40 verankert und über einen Antriebsriemen 42 mit dem Schrittmotor verbunden.

Durch die gegensinnige Anordnung des Dorns 36 gegenüber der Arbeitsbewegung des Arbeitsschlittens 8 ist gewährleistet, dass die auf den Arbeitsschlitten 8 in Arbeitsrichtung wirkenden Kräfte, beispielsweise beim Verpressen der Kunststoffprofile 2, durch den Primärantrieb 10 aufgebracht werden. Damit kann der pneumatische Antrieb direkt auch zum Verpressen der Kunststoffprofile 2 miteinander genutzt werden, so dass der Sekundärantrieb 34 für den Dorn 36 vergleichsweise leistungs- oder momentenschwach ausgestaltet sein kann.

Zur automatisierten Bedienung der Vorrichtung 1 ist eine dem Primärantrieb 10 und dem Sekundärantrieb 32 gemeinsame zentrale Regeleinheit 50 vorgesehen, die eingangsseitig unter anderem mit einem Positionssensor 52 zur Ermittlung eines Positionskennwerts des Dorns 36 verbunden ist. Die Reglereinheit 50 steuert den Sekundärantrieb 34 dabei derart an, dass der Dorn 36 ausgehend vom Grob-Wegeanschlag 32 den bis zum ausgewählten Wegeanschlag 14, 16, 18 verbleibenden Rest-Arbeitsweg des Arbeitsschlittens 8 freigibt, wobei die Ansteuerung des Dorns 36 in Abhängigkeit vom jeweils vorgesehenen Arbeitsschritt und/oder von einem für das jeweilige Kunststoffprofil 2 charakteristischen Parameter insbesondere hinsichtlich der Bewegungsgeschwindigkeit und der Arbeitswege geeignet erfolgt. Die Ansteuerung des Dorns 36 erfolgt dabei insbesondere unter Nutzung geeigneter Zeit-Wege-Kennlinien, die in einem Speicherbaustein der Regeleinheit 50 hinterlegt sind.

Die Vorrichtung 1 kann insbesondere auch in einer sogenannten Einstellen-Schweißmaschine eingesetzt sein, bei der beidseitig von einem feststehenden Heizspiegel oder Profilanschlag synchron zueinander bewegte Arbeitsschlitten vorgesehen sind. In der im Ausführungsbeispiel vorgesehenen Vierstellen-Schweißanlage ist eine Mehrzahl der Vorrichtungen 1 vorgesehen, wobei in den Eckbereichen des herzustellenden Rahmenteils jeweils ein feststehender Heizspiegel oder Profilanschlag angeordnet ist, und wobei sich beidseitig der Heizspiegel oder Profilanschläge jeweils zwei Arbeitsschlitten synchron zueinander bewegen. Die Vorrichtungen 1 sind über eine gemeinsame Regeleinheit 50 synchron angesteuert, so dass eine selbsttätige Zentrierung der Kunststoffprofile 2 eintritt.

Bezugszeichenliste
- 1: Vorrichtung
- 2: Kunststoffprofil
- 4: Tisch
- 6: Pfeil
- 8: Arbeitsschlitten
- 10: Primärantrieb
- 12: Antriebszylinder
- 14,16,18: Wegeanschlag
- 20: Halterahmen
- 22: Anschlagsdornen
- 30: Zusatzhalterahmen
- 32: Grob-Wegeanschlag
- 34: Sekundärantrieb
- 36: Dorn
- 38: Dämpfungselement
- 40: Lagergehäuse
- 42: Antriebsriemen
- 50: Regeleinheit
- 52: Positionssensor

## Patentansprüche

1. Vorrichtung (1) zum Verschweißen von Kunststoffprofilen (2) zu einem Rahmenteil, insbesondere für Fenster, Türen oder dergleichen, mit einem über einen Primärantrieb (10) angetriebenen Arbeitsschlitten (8), der mittels einer Anzahl von schaltbaren Wegean schlägen (14, 16, 18) in eine Anzahl vorgegebener Betriebspositionen verfahrbar ist, und mit einem Grob-Wegeanschlag (32) für den Arbeitsschlitten (8), der mit einem in Bewegungsrichtung des Arbeitsschlittens verschiebbaren, über einen Sekundärantrieb (34) angetriebenen Dorn (36) zusammenwirkt.

2. Vorrichtung (1) nach Anspruch 1, bei der der Dorn (36) gegen die Arbeitsbewegung des Primärantriebs (10) wirkt.

3. Vorrichtung (1) nach Anspruch 1 oder 2, deren Primärantrieb (10) als pneumatischer Antrieb ausgestaltet ist.

4. Vorrichtung (1) nach einem der Ansprüche 1 bis 3, deren Grob-Wegeanschlag (32) mit einem Dämpfungselement (38) versehen ist.

5. Vorrichtung (1) nach einem der Ansprüche 1 bis 4, deren über den Sekundärantrieb (34) angetriebener Dorn (36) als elektrisch angetriebene Spindel ausgestaltet ist.

6. Vorrichtung (1) nach Anspruch 5, deren Spindel über einen Schrittmotor angetrieben ist.

7. Vorrichtung (1) nach einem der Ansprüche 1 bis 6, deren Dorn (36) ein Positionssensor (52) zugeordnet ist.

8. Vorrichtung (1) nach einem der Ansprüche 1 bis 7, bei der dem Primärantrieb (10) und dem Sekundärantrieb (34) eine gemeinsame Regeleinheit (50) zugeordnet ist, die den Sekundärantrieb (34) derart ansteuert, dass der Dorn (36) ausgehend vom Grob-Wegeanschlag (32) den bis zu einem ausgewählten Wegeanschlag (14, 16, 18) verbleibenden Rest-Arbeitsweg des Arbeitsschlittens (8) freigibt.

9. Vorrichtung (1) nach Anspruch 8, deren Regeleinheit (50) einen Speicherbaustein umfasst, in dem zur Ansteuerung des Dorns (36) in Abhängigkeit von einem der jeweiligen Bearbeitungsposition zugeordneten Arbeitsschritt und/oder abhängig von einem für das Kunststoffprofil (2) charakteristischen Parameter, insbesondere einem Materialkennwert, eine Mehrzahl von Zeit-Wege-Kennlinien hinterlegt sind.

10. Verfahren zum Verschweißen von Kunststoffprofilen (2) zu einem Rahmenteil, insbesondere für Fenster, Türen oder dergleichen, bei dem eine Anzahl der Kunststoffprofile (2) mittels eines über einen Primärantrieb (10) angetriebenen Arbeitsschlittens (8) in eine Anzahl von über zugeordnete Wegeanschläge (14, 16, 18) vorgegebene Bearbeitungspositionen gebracht wird, wobei beim Anfahren einer Bearbeitungsposition zunächst ein mit einem Dorn (36) zusammenwirkender Grob-Wegeanschlag (32) für den Arbeitsschlitten (8) angefahren wird, und wobei anschließend über eine Ansteuerung des Dorns (36) über einen Sekundärantrieb (34) ausgehend vom Grob-Wegeanschlag (32) der bis zum ausgewählten Wegeanschlag (14, 16, 18) verbleibende Restweg des Arbeitsschlittens (8) freigegeben wird.

11. Verfahren nach Anspruch 10, bei dem der Dorn (36) gegen die Arbeitsbewegung des Primärantriebs (10) wirkt.

12. Verfahren nach Anspruch 10 oder 11, bei dem der Dorn (36) als über einen Schrittmotor angetriebene Spindel ausgestaltet ist.

13. Verfahren nach einem der Ansprüche 10 bis 12, bei dem der Dorn (36) hinsichtlich seiner Bewegungsgeschwindigkeit und/oder seines Arbeitsweges abhängig von einem der jeweiligen Bearbeitungsposition zugeordneten Arbeitsschritt angesteuert wird.

14. Verfahren nach einem der Ansprüche 10 bis 13, bei dem der Dorn (36) hinsichtlich seiner Bewegungsgeschwindigkeit und/oder seines Arbeitsweges abhängig von einem für das Kunststoffprofil charakteristischen Parameter, insbesondere einem Materialkennwert, angesteuert wird.

## Claims

1. A device (1) for welding plastic profiles (2) to form a frame part, in particular for windows, doors or the like, having a working carriage (8) driven via a primary drive (10), which working carriage (8) can be moved by means of a number of switchable path stops (14, 16, 18) into a number of predefined operating positions, and having a coarse path stop (32) for the working carriage (8), cooperating with a pin (36) which is driven via a secondary drive (34) and is displaceable in the direction of movement of the working carriage.

2. The device (1) of claim 1, wherein the pin (36) acts opposite to the working movement of the primary drive (10).

3. The device (1) of claim 1 or 2, wherein its primary drive (10) is designed as a pneumatic drive.

4. The device (1) of any of claims 1 to 3, wherein its coarse path stop (32) is provided with a damping element (38).

5. The device (1) of any of claims 1 to 4, wherein its pin (36) driven via the secondary drive (34) is designed as an electrically driven spindle.

6. The device (1) of claim 5, wherein its spindle is driven by a stepping motor.

7. The device (1) of any of claims 1 to 6, wherein a position sensor (52) is associated with its pin (36).

8. The device (1) of any of claims 1 to 7, wherein a common control unit (50) is associated with the primary drive (10) and with the secondary drive (34), said control unit (50) controlling the secondary drive (34) in such a way that the pin (36), starting from the coarse path stop (32), releases the remaining working path of the working carriage (8) up to a selected path stop (14, 16, 18).

9. The device (1) of claim 8, whose control unit (50) comprises a memory module, in which a plurality of time-path characteristics are stored, for controlling the pin (36) as a function of a working step associated with the corresponding operating position and/or as a function of a parameter characteristic of the plastic profile (2), in particular a material parameter.

10. A method for welding plastic profiles (2) to form a frame part, in particular for windows, doors or the like, wherein a number of plastic profiles (2) is moved by means of a working carriage (8) driven via a primary drive (10) into operating positions predefined by means of associated path stops (14, 16, 18), wherein, upon approaching an operating position, first of all a coarse path stop (32) for the working carriage (8), cooperating with a pin (36), is approached, and wherein afterwards, through a control of the pin (36) via a secondary drive (34), the remaining working path of the working carriage (8) up to the selected path stop (14, 16, 18) is released.

11. The method of claim 10, wherein the pin (36) acts opposite to the working movement of the primary drive (10).

12. The method of claim 10 or 11, wherein the pin (36) is designed as a spindle driven by a stepping motor.

13. The method of any of claims 10 to 12, wherein the pin (36) is controlled, with regard to its moving speed and/or its working path, as a function of a working step associated with the respective operating position.

14. The method of any of claims 10 to 13, wherein the pin (36) is controlled, with regard to its moving speed and/or its working path, as a function of a parameter characteristic of the plastic profile, in particular a material parameter.

## Revendications

1. Dispositif (1) pour souder des profils plastiques (2) pour former un élément de cadre, en particulier pour des fenêtres, des portes ou similaires, ayant un chariot de travail (8) actionné par une commande primaire (10), qui peut être déplacé au moyen d'un nombre de butées de course (14, 16, 18) commutables, dans un nombre de positions de service prédéfinies, et ayant une butée de course grossière (32) pour le chariot de travail (8), concourant avec un mandrin (36) qui est actionné par une commande secondaire (34) et est déplaçable dans la direction de mouvement du chariot de travail.

2. Dispositif (1) selon la revendication 1, dans lequel le mandrin (36) agit de manière opposée au mouvement de travail de la commande primaire (10).

3. Dispositif (1) selon la revendication 1 ou 2, dont la commande primaire (10) est conçue comme une commande pneumatique.

4. Dispositif (1) selon l'une quelconque des revendications 1 à 3, dont la butée de course grossière (32) est pourvue d'un élément d'amortissement (38).

5. Dispositif (1) selon l'une quelconque des revendications 1 à 4, dont le mandrin (36) actionné par la commande secondaire (34) est conçu comme une broche actionnée électriquement.

6. Dispositif (1) selon la revendication 5, dont la broche est actionnée par un moteur pas à pas.

7. Dispositif (1) selon l'une quelconque des revendications 1 à 6, dans lequel un détecteur de position (52) est affecté à son mandrin (36).

8. Dispositif (1) selon l'une quelconque des revendications 1 à 7, dans lequel une unité de contrôle (50) commune est affectée à la commande primaire (10) et à la commande secondaire (34), dite unité de contrôle (50) contrôlant la commande secondaire (34) de façon à ce que le mandrin (36), en partant de la butée de course grossière (32), relâche la course de travail restante du chariot de travail (8) jusqu'à une butée de course (14, 16, 18) sélectionnée.

9. Dispositif (1) selon la revendication 8, dont l'unité de contrôle (50) comprend un module mémoire, dans lequel une pluralité de courbes caractéristiques de temps et course est enregistrée, pour contrôler le mandrin (36) en fonction d'un pas de travail affecté à la position de service correspondante et/ou en fonction d'un paramètre caractéristique du profil plastique (2), en particulier un paramètre de matériau.

10. Procédé pour souder des profils plastiques (2) pour former un élément de cadre, en particulier pour des fenêtres, des portes ou similaires, dans lequel un nombre de profils plastiques (2) est déplacé au moyen d'un chariot de travail (8) actionné par une commande primaire (10), dans des positions de service prédéfinies par des by butées de course (14, 16, 18) y affectées, dans lequel, lors du rapprochement à la position de service, d'abord, une butée de course grossière (32) pour le chariot de travail (8), concourant avec un mandrin (36), est approché, et dans lequel ensuite, à l'aide d'un contrôle du mandrin (36) par une commande secondaire (34), la course de travail restante du chariot de travail (8) jusqu'à la butée de course (14, 16, 18) sélectionnée est relâchée,

11. Procédé selon la revendication 10, dans lequel le mandrin (36) agit de manière opposée au mouvement de travail de la commande primaire (10).

12. Procédé selon la revendication 10 ou 11, dans lequel le mandrin (36) est conçu comme une broche actionnée par un moteur pas à pas.

13. Procédé selon l'une quelconque des revendications 10 à 12, dans lequel le mandrin (36) est contrôlé, en ce qui concerne sa vitesse de mouvement et/ou sa course de travail, en fonction d'un pas de travail affecté à la position de service respective.

14. Procédé selon l'une quelconque des revendications 10 à 13, dans lequel le mandrin (36) est contrôlé, en ce qui concerne sa vitesse de mouvement et/ou sa course de travail, en fonction d'un paramètre caractéristique du profil plastique, en particulier un paramètre de matériau
